# EUROPÄISCHE PATENTSCHRIFT

(11) **EP 0 396 000 B1**
(45) Veröffentlichungstag und Bekanntmachung des Hinweises auf die Patenterteilung: **10.03.1993**
(21) Anmeldenummer: 90107761.0
(22) Anmeldetag: 24.04.1990
(51) Int. Cl.: B60Q 1/42

(54) **Schaltvorrichtung für optische und akustische Signalgeber**
Switching device for optical and acoustical signalling apparatus
Dispositif de commutation pour avertisseur optique et acoustique

(30) Priorität: 29.04.1989 DE 3914403
(43) Veröffentlichungstag der Anmeldung: 07.11.1990
(73) Patentinhaber: DEERE & COMPANY, Moline, Illinois 61265 (US)
(72) Erfinder: Hauk, Klaus, D-6701 Altrip (DE)
(74) Vertreter: Feldmann, Bernhard

(56) Entgegenhaltungen:
- US-A- 4 139 749

## Beschreibung

Die Erfindung betrifft eine Schaltvorrichtung für optische und akustische Signalgeber, insbesondere für Richtungsanzeige, Abblend-Fernlicht-Umschaltung, Lichthupe und/oder Signalhorn von Fahrzeugen mit einer Schaltkonsole, in der ein Schalthebel derart gelagert ist, daß durch Verkippen der Schalthebelasche Schaltelemente betätigbar sind, und mit einer in der Schalthebelachse verlaufenden Zugfeder, die Rastmittel zur Arretireung des Schalthebels in unterschiedlichen Kippschaltstellungen vorspannt.

Kombinationsschalter für optische und akustische Signale haben in der Kraftfahrzeugtechnik weite Verbreitung gefunden. Durch Kombinationsschalter von Personenkraftwagen, die häufig als Lenkstockschalter ausgebildet sind, können eine Reihe unterschiedlicher Signalgeber betätigt werden. Dabei werden in der Regel Schaltkontakte geschlossen oder geöffnet, wodurch Schaltelemente wie Relais angesteuert werden, die ihrerseits die Signalgeber betätigen.

Eine Schaltvorrichtung der eingans gennanten Art ist in der US-A -4 139 749 beschrieben. Bei ihr ist ein Schalthebel durch ein Kardangelenk in einem Gehäuse um zwei senkrecht zueinander stehende Achsen verkippbar gelagert. Durch das Verkippen lassen sich zwei Schaltschieber, auf denen Kontaktbrücken angeordnet sind, verschieben. Dabei gleiten die Kontaktbrücken auf einer feststehenden Leiterplatte und verbinden wahlweise unterschiedliche freiliegende Leiterbahnen miteinander, um unterschiedliche Kontakte zwischen den Leiterbahnen herzustellen und die gewünschten Schaltfunktionen auszulösen. Durch die Kontaktbrücken und die Leiterbahnen lassen sich jedoch nur relativ geringe Stromstärken schalten, so daß zusätzliche Schalthilfsgeräte, beispielsweise Relais, erfordelich sind. In einen Rastbolzen ist eine Zugfeder eingehängt. Der Rastbolzen bewegt sich beim Verkippen des Schalthebels über eine Erhebung, durch die Rastpositionen gebildet werden. Einer der Schaltschieber wird durch eine Druckfeder in seine Ausgangslage gedrängt.

Bei landwirtschaftlichen Maschinen, insbesondere Ackerschleppern, sowie bei Baumaschinen und dergleichen, werden die genannten Signalgeber in der Regel nicht so häufig betätigt wie bei Kraftfahrzeugen, die in der Regel ausschließlich am öffentlichen Verkehr teilnehmen. Daher werden die Signalgeber meistens durch jeweils gesonderte, auf einer Armaturenwand angeordnete Schalter ausgelöst.

Beispielsweise ist durch die DE-A-2 620 192 für ein Flurförderzeug ein Schalter zur Bedienung der Fahrtrichtungsanzeige bekannt geworden. Dieser Schalter dient dem wahlweisen Einschalten eines zweier Stromkreise und weist einen um eine Achse schwenkbaren Handhebel auf, der aus einer mittleren Neutralstellung in eine der beiden Einschaltstellungen geschwenkt werden kann, wo er einrastet. In jeder der Einschaltstellungen wird die Betätigungstaste eines Sprungschalters durch einen am Handhebel befestigten Nocken niedergedrückt, wodurch eine Schaltfunktion ausgeführt wird.

Die Anzahl der Bedienungs- und Kontrollgeräte auf der Armaturenwand von landwirtschaftlichen Fahrzeugen hat in letzter Zeit sprunghaft zugenommen. Um die Übersichtlichkeit nicht zu gefährden, ist es wünschenswert, einige Steuerfunktionen auf einem Bedienungshebel zusammenzufassen, ohne daß, wie bei PKW's üblich, zusätzliche Schalthilfsgeräte, wie z. B. Relais, erforderlich sind.

Die der Erfindung zugrunde liegende Aufgabe wird darin gesehen, eine Schaltvorrichtung der eingangs genannten Art anzugeben, durch die mehrere Schaltfunktionen bei Betätigung eines Bedienungshebels ausgeführt werden können, die kostengünstig herstellbar ist und eine unmittelbare Betätigung der optischen und akustischen Signalgeber ohne Zwischenschaltung zusätzlicher elektrischer Schalthilfsgeräte ermöglicht.

Die Aufgabe wird ausgehend von einer Schaltvorrichtung der eingangs genannten Art erfindungsgemäß durch die kennzeichnenden Merkmale des Patentanspruches 1 gelöst. Die Zugfeder greift mit ihrem einen Ende an dem Schalthebel und mit ihrem anderen Ende an der Schalterkonsole an. Die Zugkraft der Zugfeder zieht dabei den Schalthebel zur Schaltkonsole und hält ihn an dieser fest, wobei ein Verdrehen und Verkippen des Schalthebels bezüglich der Schalthebelachse möglich bleibt.

Die Funktion der Hupe wird vorzugsweise durch einen Stößel im oberen Schalthebelteil in der Form erreicht, daß zwei handelsübliche, mit Kabeln versehene Flachsteckkontakte gegeneinander gedrückt werden. Eine Druckfeder am Ende des Stößels hält beide Kontakte auf Distanz und sorgt für die Rückstellung, nachdem der Stößel gedrückt war. Einer der beiden Flachsteckkontakte dient dabei außerdem zur Arretierung des Stößels im oberen Schalthebelteil. Anstelle der Hupe-Funktion kann durch Betätigung des Stößels auch eine andere Funktion ausgeführt werden. Beispielsweise kann durch Druck auf den Stößel und Berührung der Kontakte die Umschaltung einer Display-Anzeige vorgenommen werden.

Die Funktion des Blinkens (rechts und links) wird vorzugsweise durch zwei vertikal zur Drehachse in der Schaltkonsole außermittig montierte Mikroschalter erreicht, die je nach Drehrichtung des Schalthebels über Anschläge eines Rastlagers wechselseitig betätigt werden. Da diese Schalter als Wechselschalter ausgebildet sein können, ergibt sich eine Vielzahl von elektrischen Verknüpfungsmöglichkeiten, die insbesondere für die Vereinheitlichung der unterschiedlichen elektrischen Systeme SAE und ECE von großem Vorteil sind.

Die Funktion Licht wird vorzugsweise durch einen dritten vertikal in der Mitte (zwischen den Schaltern für das Blinken) montierten Mikroschalter erreicht. Dieser wird bei Drücken (Verkippen) des Schalthebels von Abblendlicht auf Fernlicht umgeschaltet. Diese Schaltposition bleibt bei einer evtl. gleichzeitigen Drehbewegung zum Blinken unverändert erhalten und wird nur durch Ziehen am Schalthebel wieder aufgehoben.

Die Funktion Lichthupe erfolgt vorzugsweise wie bei den in der Automobilindustrie üblichen Lenkradschaltern durch Ziehen des Schalthebels. Dabei wird wiederum ein handelsüblicher Steckkontakt am unteren Schalthebelteil gegen einen unter einer Verbindungsschraube montierten handels-üblichen Kabelschuh gedrückt. Die Rückstellung in die Grundstellung erfolgt hierbei automatisch, d.h. bei der Lichthupenbetätigung wird keine Rastposition eingenommen, sondern lediglich eine Tastfunktion ausgeführt.

Die erfindungsgemäße Schaltvorrichtung ist insbesondere bei landwirtschaftlichen Maschinen, wie Ackerschleppern, sowie bei Baumaschinen vorteilhaft anwendbar. Sie läßt sich besonders preiswert herstellen. Durch sie können die wichtigsten, für das Fahren auf öffentlichen Straßen erforderlichen Signalgeber mit lediglich einem Hebel betätigt werden, so daß einige der bisher üblichen Betätigungsorgane entfallen können. Da durch die Betätigung des Schalthebels unmittelbar Schaltkontakte betätigt werden, können zusätzliche Relais und dergleichen entfallen. Die Schaltkontakte können im Bedarfsfall leicht ausgewechselt werden. Als Mikroschalter können Umschalter verwendet werden, die eine vielseitige Ansteuerung der Signalgeber ermöglichen, so daß nur geringe Verdrahtungsunterschiede vorgenommen werden müssen, um entweder die Anforderungen im SAE- oder die im ECE-Bereich zu erfüllen.

Weitere vorteilhafte Ausgestaltungen der Erfindung gehen aus den Unteransprüchen hervor.

Anhand der Zeichnung, in der ein Ausführungsbeispiel der Erfindung gezeigt ist, sollen die Erfindung sowie weitere vorteilhafte Ausgestaltungen und Weiterbildungen der Erfindung beschrieben und näher erläutert werden.

Es zeigt:
Fig. 1 die Schnittdarstellung einer zusammengebauten Schaltvorrichtung gemäß der Erfindung,
Fig. 2 den Längsschnitt des oberen Teiles eines Schalthebels,
Fig. 3 eine Schnittdarstellung des Schalthebels gemäß Fig. 2 entlang der Linie 3-3,
Fig. 4 die Seitenansicht eines Stößels,
Fig. 5 die Aufsicht und
Fig. 6 den Längsschnitt des unteren Teiles eines Schalthebels,
Fig. 7 die Aufsicht,
Fig. 8 den axialen Schnitt und
Fig. 9 die Unteransicht einer Schaltkonsole,
Fig. 10 den Längsschnitt und
Fig. 11 die Unteransicht eines Rastlagers,
Fig. 12 den axialen Schnitt und
Fig. 13 die Unteransicht einer Schaltkulisse und
Fig. 14 die Aufsicht des Rastlagers gemäß Fig. 10 und 11 mit der angedeuteten Lage von Mikroschaltern.

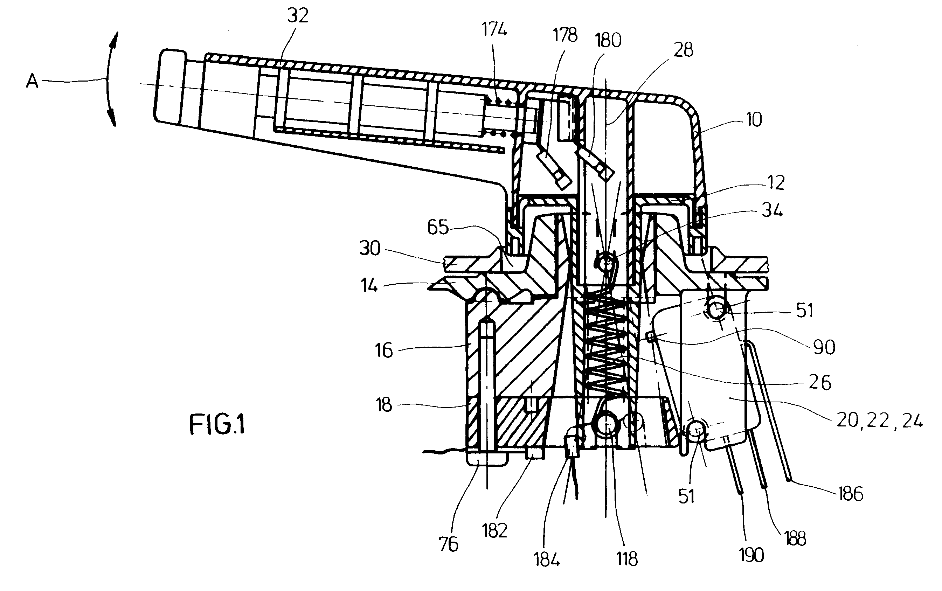

Aus Fig. 1 geht eine Schaltvorrichtung gemäß der Erfindung hervor, die im wesentlichen aus einem Schaltelement mit einem oberen Teil 10 und einem unteren Teil 12, einer Schaltkonsole 14, einem Rastlager 16, einer Schaltkulisse 18 und drei Mikroschaltern 20, 22, 24 besteht. Der Schalthebel 10, 12, die Schaltkonsole 14, das Rastlager 16 und die Schaltkulisse 18 sind vorzugsweise aus einem spritzfähigen Kunststoff gefertigt und werden durch eine Zugfeder 26 zusammengehalten. Der Schalthebel 10, 12 läßt sich mit dem Rastlager 16 und der Schaltkulisse 18 um einen bestimmten Betrag bezüglich der Schalthebelachse 28 verdrehen. Die an einer Armaturenwand 30 befestigte Schaltkonsole 14 und die an dieser befestigten Schalter 20, 22, 24 behalten bei der Verdrehung ihre Lage bei. Das abgewinkelte freie Ende 32 des oberen Teils 10 des Schalthebels läßt sich aus der dargestellten Ruhelage in die durch den Doppelpfeil A angedeuteten Richtungen zur Armaturenwand 30 hin und von dieser weg verkippen. Als Kippachse dient ein sich quer zur Schalthebelachse erstreckender Stift 34. An der Kippbewegung nehmen lediglich der obere und der untere Teil 10, 12 des Schalthebels teil, während die Schaltkonsole 14, das Rastlager 16 und die Schaltkulisse 18 ihre Lage beibehalten.

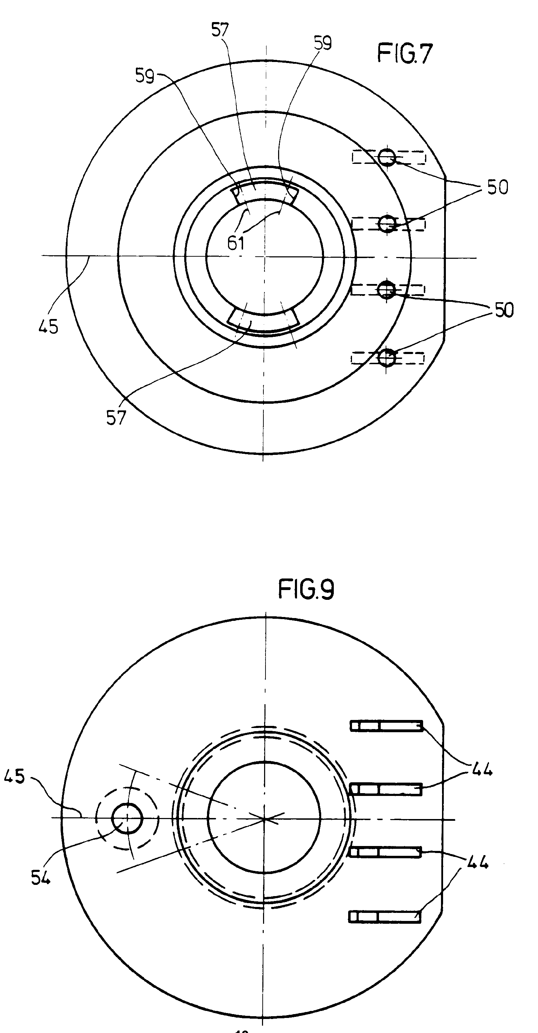

Auf der Rückseite der Armaturenwand 30 eines nicht dargestellten Kraftfahrzeuges ist eine Schaltkonsole 14, wie sie in den Figuren 7, 8 und 9 näher dargestellt ist, durch Verschrauben oder durch andere geeignete Mittel befestigt. Die Konsole 14 ist im wesentlichen flanschförmig ausgebildet und weist einen Ansatz 38 und eine axiale zylindrische Ausnehmung 40 auf. Auf der Rückseite der Konsole 14 sind an dem Flansch 42 vier parallel ausgerichtete, sich axial erstreckende Zwischenwände 44 angeformt. Die Zwischenwände 44 sind hinsichtlich der Mittellinie 45 symmetrisch angeordnet. Am freien Ende jeder Zwischenwand 44 befindet sich eine axial verlaufende schlitzförmige Ausnehmung 46. Jeweils eine weitere längliche und axial ausgerichtete Ausnehmung 48 befindet sich auf der dem Flansch 42 zugewandten Seite der Zwischenwände 44. Aus Herstellungsgründen befindet sich in dem Flansch 42 im Bereich der länglichen Ausnehmungen 48 jeweils ein Durchbruch 50.

Zwischen den Zwischenwänden 44 werden Mikroschalter 20, 22, 24 montiert, wie es in Fig. 1 angedeutet ist. Die Mikroschalter 20, 22, 24 weisen an zwei diametral gegenüberliegenden Ecken je eine Bohrung auf. Durch diese Bohrungen und die Ausnehmungen 46, 48 in den Zwischenwänden 44 der Schaltkonsole 14 werden Gewindestifte 51 gesteckt und festgeschraubt.

Der den Zwischenwänden 44 gegenüberliegende Teil der Rückseite des Flansches 42 weist eine abgerundete Erhöhung 52 auf, in deren Mitte eine Vertiefung 54 eingelassen ist. Die Vertiefung 54 hat eine im wesentlichen kugelförmige Oberfläche.

Auf der Stirnseite des Ansatzes 38 sind zwei hinsichtlich der Achse 28 gegenüberliegende stufen- und segmentförmige Vertiefungen 57 eingelassen. Diese sind seitlich durch radial verlaufende Anschlagflächen 59 begrenzt. Im zusammengebauten Zustand der Schaltvorrichtung nehmen die Vertiefungen die Enden des radial ausgerichteten, die Kippachse bildenden Stiftes 34 auf. Bei Verdrehen des Schalthebels 10, 12 um die Schalthebelachse 28 laufen die Enden der Stifte 34 gegen die Anschlagflächen 59 und begrenzen so die Drehbewegung. Bei Erreichen einer der Anschlagflächen 59 wird eine Schaltfunktion ausgeführt, die noch näher beschrieben werden wird. Die Vertiefungen 57 nehmen damit zwei Aufgaben wahr. Sie begrenzen einerseits den Verdrehwinkel des Schalthebels und legen damit Raststellungen 61 fest, und sie bieten den Enden des Stiftes 34 eine Auflagefläche 63, welche die durch die Zugfeder 26 hervorgerufenen axialen Kräfte aufnehmen und die axiale Verschiebung des Schalthebels 10, 12 begrenzen. Dadurch wird zwischen Schalthebel 10, 12 und Schaltkonsole 14 ein Mindestabstand 65 gewährleistet, der ein Verkippen des Schalthebels 10, 12 zuläßt, und durch den unnötige Reibung zwischen Schalthebel 10, 12 und Schaltkonsole 14 vermieden wird. Beim Verdrehen des Schalthebels 10, 12 muß im wesentlichen lediglich die Hemmkraft der Verrastung (Vertiefung 54 in der Schaltkonsole 14 und Erhöhung 82 im Rastlager), die u.a. von der Kraft der Zugfeder 26 abhängt, überwunden werden.

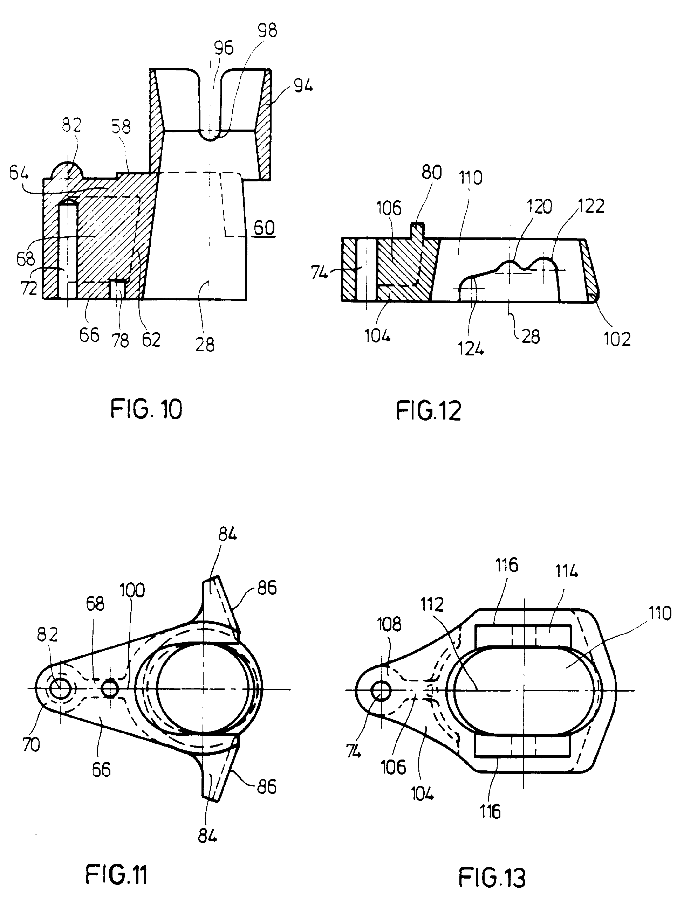

An einer Gleitfläche 56 auf der Rückseite der Schaltkonsole 14 liegt eine Anlagefläche 58 des Rastlagers 16 an, welches im einzelnen in den Figuren 10, 11 und 14 dargestellt ist. Das Rastlager 16 ist aus einem auf einer Seite 60 teilweise offenen Kegelteil 62 gebildet, das zwei parallel zueinander und sich hinsichtlich der Kegelachse 28 radial zu einer Seite erstreckende Kragen 64, 66 trägt. Ein Kragen 66 befindet sich am rückseitigen Ende und das andere Kragenteil 64 am mittleren Bereich der Kegelteile 62. Zwischen den Kragenteilen 64, 66 erstreckt sich eine radial ausgerichtete Verbindungswand 68, die sich in ihrem radial äußeren Bereich 70 zylindrisch aufweitet. In diesem zylindrischen Bereich 70 ist von dem rückseitigen Ende aus eine Gewindesackbohrung 72 eingebracht, die mit einer Durchgangsbohrung 74 der Schaltkulisse 18 fluchtet und der Verschraubung beider Teile durch eine Gewindeschraube 76 dient. Ferner ist in den rückseitigen Kragen 66 eine Sackbohrung 78 eingelassen, in die im zusammengebauten Zustand ein an der Schaltkulisse 18 angeformter, zylindrischer Zapfen 80 eingreift. Dies verhindert eine Verdrehung beider Teile 16, 18 relativ zueinander.

Der mittlere Kragen 64 trägt auf seiner der Schaltkonsole 14 zugewandten Seite eine im wesentlichen kugelförmige Erhöhung 82, die mit der Vertiefung 54 auf der Rückseite der Schaltkonsole 14 korrespondiert und bei entsprechender relativer Verdrehung beider Teile 14, 16 zueinander in diese eingreift. Aus dieser Eingriffsstellung kann das Rastlager 16 nach rechts oder links heraus gedreht werden. Dabei wird die Erhöhung 82 des Rastlagers 16 aus der Vertiefung 54 der Schaltkonsole 14 gedrückt und gleitet über die Erhöhung 52 der Schaltkonsole 14 ab. Die hierdurch hervorgerufene axiale Verschiebung des Rastlagers 16 wird durch die Zugkraft der Zugfeder 26 zurückgestellt. Es ergeben sich so drei Raststellungen, eine mittlere, eine rechte und eine linke, die durch Drehung des Schalthebels 10, 12 erreicht werden. Die äußeren Raststellungen werden durch die Lage der Anschlagflächen 59 der Schaltkonsole 14 begrenzt.

Eine weitere bevorzugte Ausbildung der Einrastung in eine mittlere Position kann an Stelle der Vertiefung 54 und der Erhöhung 82 auch durch zwei zur Schalthebelachse 28 symmetrisch angeordnete, nicht dargestellte Vertiefungen und Erhöhungen erreicht werden. Beispielsweise kann sich je eine Erhöhung auf den noch zu beschreibenden Laschen 84 des Rastlagers 16 befinden, und zwar auf denen der Schaltkonsole 14 zugewandten Seitenflächen. Hierzu ist es zweckmäßig, die Lasche 84 etwas breiter auszubilden, als sie in Fig. 11 dargestellt wurde. Die Schaltkonsole 14 enthält in diesem Fall zwei zu den Erhöhungen korrespondierende, zur Schalthebelachse 28 symmetrisch angeordnete Vertiefungen. Diese Ausbildung hat den Vorteil gegenüber einer Ausbildung mit lediglich einer Raststelle, daß beim Verdrehen des Schalthebels das Rastlager 16 nicht zum Verkippen neigt, da die Kräfte symmetrisch zur Achse 28 verlaufen.

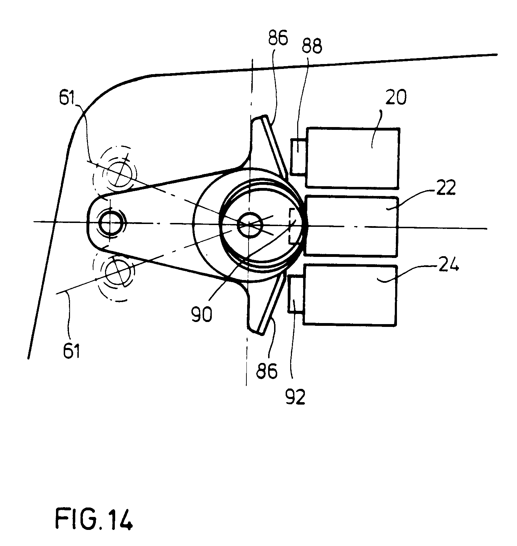

Der Kegelteil 62 des Rastlagers 16 ist zu der den Kragen 64, 66 abgewandten Seite 60 hin teilweise offen, so daß der erforderliche Raum für die Mikroschalter 20, 22, 24 gebildet wird. Zu dieser Seite 60 hin sind beidseits am mittleren Kragen 64 und am Kegelteil 62 je eine Lasche 84 angeformt. Jede Lasche trägt eine zurückspringende Flanke 86, die bei Verdrehen des Rastlagers 16 aus seiner mittleren Position (die in Fig. 14 dargestellt ist) gegen das Betätigungselement 88 oder 92 eines der seitlich angeordneten Mikroschalter 20, 24 drückt und eine Schaltfunktion auslöst.

Die Mikroschalter 20, 24 dienen der Ansteuerung der optischen Richtungsanzeige des Fahrzeuges. Sie stehen mit einem Blinkgeber in Verbindung. Vorzugsweise handelt es sich bei den Mikroschaltern 20, 24 um Umschalter. Diese lassen alternative Verdrahtungen zu, die den Anforderungen im SAE- und ECE-Bereich angepaßt werden können.

Das Kegelteil 62 des Rastlagers 16 erstreckt sich über den mittleren Kragen 64 hinaus und geht in einen Ansatz 94 mit zylindrischer Außenfläche über, die mit der zylindrischen Ausnehmung 40 der Schaltkonsole 14 eine Drehlagerstelle bildet. Durch die sich gegenüberliegenden Seitenflächen des Ansatzes 94 erstreckt sich ein zum freien Ende des Ansatzes 94 hin offener axialer Schlitz 96, der quer zur Ausrichtung der Kragen 64, 66 ausgerichtet ist. Der Schlitzgrund 98 nimmt im zusammengebauten Zustand der Schaltvorrichtung den Stift 34 auf, der die Kippachse bildet und in den die Zugfeder 26 eingehängt ist. Die Innenkontur des Rastlagers 16 weist zwei kegelförmige Abschnitte auf, die sich ausgehend von dem Schlitzgrund 98 nach außen hin öffnen. Diese Kegelform ist in Richtung der Erstreckung der Kragen 64, 66, nicht jedoch in Richtung der Nuten 96 ausgebildet. Die Kegelform ermöglicht ein Verkippen der Achse 28 des Rastlagers 16 innerhalb der Ebene 100.

Am Rastlager 16 läßt sich, wie erwähnt wurde, eine Schaltkulisse 18 festschrauben. Diese ist in den Fig. 12 und 13 näher dargestellt. Die Schaltkulisse 18 weist ebenfalls ein Kegelteil 102 auf, an dessen einer Seite ein Kragen 104 und ein radial ausgerichtetes Stegteil 106 angeformt sind. Das Stegteil 106 weitet sich an seinem freien Ende zu einem Zylinder 108 auf, der in Richtung der Schaltkulissenachse 28 verläuft und die erwähnte Bohrung 74 aufnimmt. Symmetrisch zur Schaltkulissenachse 28, die bei montierter Schaltvorrichtung mit der Schalthebeldrehachse 28 zusammenfällt, verläuft durch die Schaltkulisse 18 eine im wesentlichen ovale Ausnehmung 110. Diese Ausnehmung 110 weitet sich bezüglich der Ebene 112, in der der Stegteil 106 liegt, zu der dem Rastlager 16 abgewandten Seite kegelförmig auf.

Auf der dem Rastlager 16 abgewandten Seite befinden sich beidseits der Ausnehmung 110 und symmetrisch zur Ebene 112 je ein stufenförmig ausgebildeter Führungskanal 114. Der Abstand zwischen den Stirnflächen 116 des Führungskanales 114 entspricht in etwa der Länge eines Kulissenstiftes 118, der in diesem Führungskanal 114 geführt wird und seitlich verschiebbar ist. In diesen Stift 118 ist das andere Ende der Zugfeder 26 einhängbar. Der Führungskanal 114 weist eine in der Schaltkulissenachse 28 liegende, sich axial erstreckende mittlere Einbuchtung 120 und eine auf der einen Seite neben der Schaltkulissenachse 28 liegende, sich axial erstreckende Einbuchtung 122 auf. In diesen Einbuchtungen 120, 122 wird der durch die Federkraft beaufschlagte Stift 118 stationär gehalten, so daß kein selbsttätiges Verkippen erfolgt. Es ergibt sich somit eine mittlere und eine seitliche stationäre Lage. Auf der anderen Seite neben der Schaltkulissenachse 28 befindet sich eine schräg auslaufende Einbuchtung 124, in die der Stift 118 durch Aufbringen einer Kippkraft gebracht werden kann. Diese Einbuchtung 124 bildet jedoch keine für den Stift 118 stabile Lage. Bei nachlassender Kippkraft nimmt der Stift 118 wieder die Lage der mittleren Einbuchtung 120 ein. Die Form der Einbuchtungen 120, 122, 124 bildet eine Kulissenbahn, durch die sich zwei Raststellungen und eine Taststellung beim Verkippen des Schalthebels ergeben.

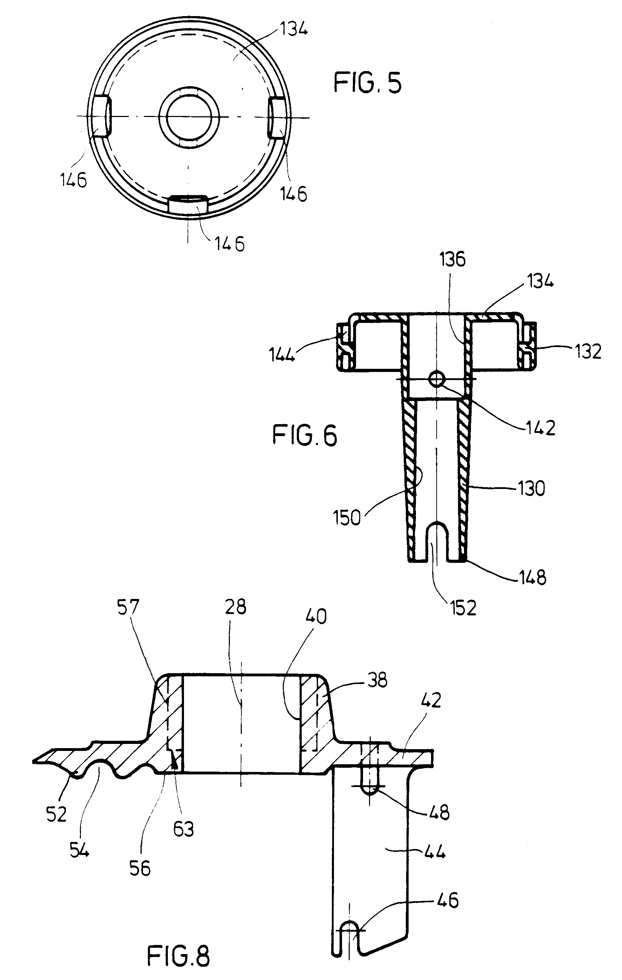

Der untere Teil 12 des Schalthebels ist im einzelnen in Fig. 5 und 6 dargestellt. Er besteht aus einem rohrförmigen Teil 130, an dessen oberen Ende ein hutförmiges Teil mit Hutkrempe 132 und Hutoberseite 134 angeformt ist. Axial durch den unteren Schalthebelteil 12 erstreckt sich eine zylinderförmige Ausnehmung, die im oberen Abschnitt als zylindrische Paßfläche 136 ausgebildet ist, in die bei montierter Schaltvorrichtung eine zylindrische Paßfläche 138 des oberen Schalthebelteiles 10 eingreift. Die mechanische Verbindung des oberen mit dem unteren Schalthebelteil 10, 12 erfolgt über den die Kippachse bildenden Stift 34, der durch entsprechende Bohrungen 140, 142 im oberen und unteren Schalthebelteil 10, 12 gesteckt ist.

Der Paßstift 34 erfüllt damit eine Vielzahl von Funktionen: Über ihn ist die Zugfeder 26 eingehängt, er ist Kippunkt für den ganzen Mechanismus, er verbindet die beiden Teile 10, 12 des Schalthebels, er dient als Anschlag für die Rechts- und Linksdrehung, und er gewährleistet einen Mindestabstand zwischen Schalthebel 10, 12 und Schaltkonsole 14.

Die Hutkrempe 132 weist eine zur Hutoberseite 134 hin offene Ringnut 144 auf, in die ein zylindrischer Ringabschnitt 145 des oberen Schalthebelteiles 10 eingreift, um eine stabile Verbindung zwischen den beiden Teilen 10, 12 zu gewährleisten. Um Schäden in diesem Bereich durch Überbeanspruchung (Abdrehen) zu vermeiden, können die ineinander greifenden Teile zusätzlich verzahnt ausgeführt werden. Außerdem sind beide Teile 10, 12 so aufeinander abgestimmt, daß sie einen geschlossenen Raum bilden und somit die unten beschriebenen Kontakte für die Funktion Hupe gegen eindringendes Wasser und Staub schützen. Öffnungen 146 in der Hutkrempe 132 dienen dem Abfluß von Kondenz- und Spritzwasser.

Der Außendurchmesser eines etwas unter der Hutkrempe liegenden Abschnittes des rohrförmigen Teils 130 entspricht dem kleinsten Innendurchmesser im Ansatz 94 des Rastlagers 16, so daß sich eine formschlüssige Verbindung ergibt. Beide Teile bilden hier eine Lagerstelle, die in der Achse des Stiftes 34 liegt, und um die der Schalthebel 10, 12 kippbar ist.

Der rohrförmige Teil 130 läuft zu seinem freien Ende 148 hin leicht konisch zusammen. In diesem Bereich weist die zylinderförmige Ausnehmung einen Durchmesser 150 auf, der eine freie axiale Verschiebung der Zugfeder 26 ermöglicht. Zum freien Ende 148 des rohrförmigen Teiles 130 hin erstreckt sich ein axialer Schlitz 152. In diesem Schlitz 152 wird der in dem Führungskanal 114 der Schaltkulisse 18 bewegbare Stift 118 derart geführt, daß eine Kippbewegung des Schalthebels 10, 12 sich auf den Stift 118 überträgt und diesen in dem Führungskanal 114 verschiebt.

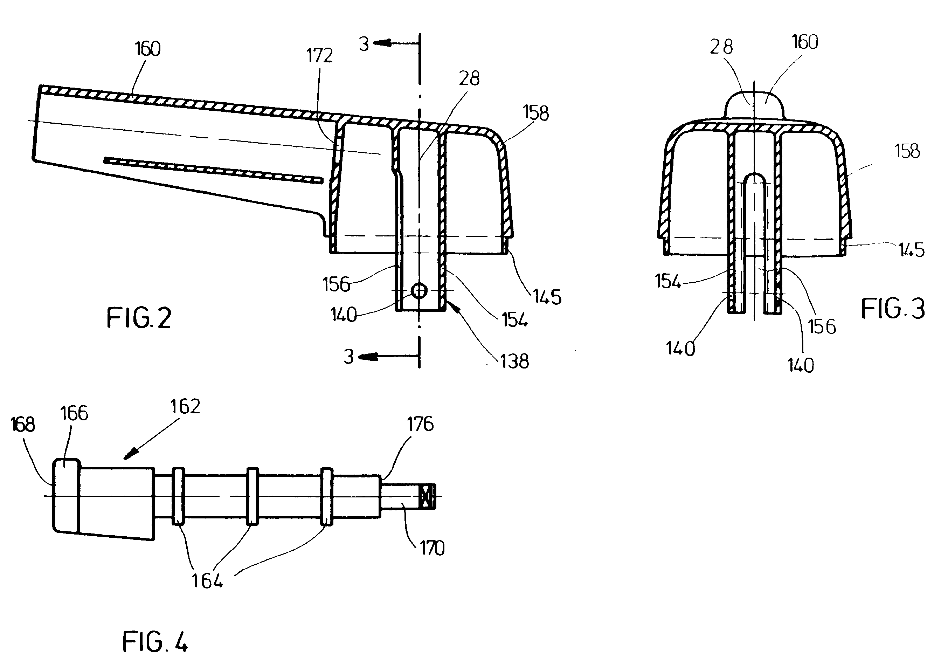

Der obere Teil 10 des Schalthebels, der in den Figuren 2 und 3 näher dargestellt ist, weist einen Rohrabschnitt 154 mit der erwähnten Paßfläche 138 und der Bohrung 140 auf. Der Rohrabschnitt 154 weist einen Längsschlitz 156 zur Durchführung von elektrischen Leitungen auf. Der Rohrabschnitt 154 ist durch ein Gehäuseteil 158 umgeben, welches den erwähnten Ringabschnitt 145 trägt. Der Gehäuseteil 158 ist zur Schalthebelachse 28 abgewinkelt ausgebildet und trägt einen der Betätigung dienenden Hebelarm 160. Der Hebelarm 160 läßt sich hinsichtlich der Drehachse 28 in gewissen Grenzen, die durch die Anschlagflächen 59 der Schaltkonsole 14 vorgegeben sind, verdrehen sowie verkippen, was durch Ziehen von der Armaturenwand 30 weg oder Drücken zu dieser hin erfolgt.

In dem Hebelarm 160 wird ein Stößel 162 geführt, der in Fig. 4 näher dargestellt ist. Der Führung dienen die Führungsstege 164. An einem Ende trägt der Stößel 162 einen Betätigungsknopf 166, auf dessen Oberfläche 168 sich von Hand ein axialer Druck ausüben läßt, um den Stößel 162 in dem Hebelarm 160 zu verschieben. Das andere Ende 170 des Stößels 162 ist verjüngt ausgeführt und wird bei der Montage durch eine Öffnung 172 im Gehäuseteil 158 des oberen Schalthebelteiles 10 gesteckt.

Vor dem Einstecken wird über das verjüngte Ende 172 eine Druckfeder 174 geschoben, die sich an einer Schulter 176 des Stößels 162 einerseits und dem Gehäuseteil 158 andererseits abstützt. Die Druckfeder 174 sorgt dafür, daß der unbelastete Stößel 162 nach außen verschoben wird. Am freien Ende 170 des Stößels 162 ist ein elektrisches Schaltstück 178 befestigt. Dies dient einerseits als Anschlag und verhindert so, daß der Stößel 162 sich infolge der Kraft der Druckfeder 174 zu weit nach außen bewegt. Andererseits bildet das Schaltstück 178 gemeinsam mit einem weiteren Schaltstück 180, welches am Rohrabschnitt des oberen Schalthebelteiles 10 befestigt ist, ein Schaltelement. Wird der Stößel 162 durch Ausübung eines Druckes auf den Betätigungsknopf 166 gegen die Federkraft verschoben, so berühren sich die beiden Kontaktstücke 178 und 180, und das Schaltelement schließt einen Stromkreis. Durch dieses Schaltelement wird zweckmäßigerweise eine akustische Hupe des Fahrzeuges mit einer Fahrzeugbatterie verbunden. Die nicht dargestellten elektrischen Anschlußleitungen werden durch den Längsschlitz 156 des oberen Schalthebelteiles 10 und innerhalb der Zugfeder 26 verlegt und hinter die Armaturenwand 30 geführt.

Mit der Gewindeschraube 76 wird ein Kontaktstück 182 an der Rückseite der Schaltkulisse 18 so befestigt, daß es teilweise in die kegelförmige Ausnehmung 110 der Schaltkulisse 18 eingreift. Diesem Kontaktstück 182 liegt ein weiteres Kontaktstück 184 gegenüber, welches am freien Ende 148 des unteren Schalthebelteiles 12 befestigt ist. Beide Kontaktstücke 182, 184 bilden ein Schaltelement, welches einen Stromkreis schließt, wenn das freie Ende 32 des Schalthebels 10 von der Armaturenwand 30 weggezogen wird und der Schalthebel 10, 12 sich um die Kippachse 34 verkippt. Diese verkippte Lage stellt eine Taststellung dar, da der Stift 118 nicht in die schräg auslaufende Einbuchtung 124 der Schaltkulisse 18 einrastet, sondern beim Freigeben des Schalthebels 10, 12 wieder in die mittlere Ruhestellung zurückwandert. Das aus den Kontaktstücken 182, 184 gebildete Schaltelement liegt in einem nicht näher dargestellten Stromkreis zwischen einer Fahrzeugbatterie und den Fernlichtlampen, die bei geschlossenem Kontakt an die Batterie angeschlossen sind und aufleuchten (Lichthupe).

Das Betätigungselement 90 des mittleren Mikroschalters 22 liegt im Einflußbereich des rohrförmigen Teiles 130 des unteren Schalthebelteiles 12. Wird das freie Ende 32 des Schalthebels 10, 12 zur Armaturenwand 30 hin gedrückt, so kippt der Schalthebel 10, 12 um seine Kippachse 34, und der rohrförmige Teil 130 drückt auf das Betätigungselement 90 und schaltet den Schalter 22 um. In dieser verkippten Lage verharrt der Schalthebel 10, 12, da der Stift 118 in die Einbuchtung 122 der Schaltkulisse 18 einrastet. Bei dem Mikroschalter 22 handelt es sich um einen Umschalter, dessen mittlerer Anschluß 186 mit einem Pol der Fahrzeugbatterie und dessen beide andere Anschlüsse 188, 190 mit dem Fernlichtanschluß oder dem Abblendlichtanschluß der Scheinwerferlampen in Verbindung stehen. Durch eine Verkippung des Schalthebelendes 32 aus der mittleren Lage in Richtung Armaturenwand 30 oder umgekehrt erfolgt somit eine Umschaltung zwischen Fernlicht und Abblendlicht.

## Patentansprüche

1. Schaltvorrichtung für optische und akustische Signalgeber, insbesondere für Richtungsanzeige, Abblend-Fernlicht-Umschaltung, Lichthupe und/oder Signalhorn von Fahrzeugen mit einer Schaltkonsole (14), in der ein Schalthebel (10, 12) derart gelagert ist, daß durch Verkippen der Schalthebelachse (28) Schaltelemente (22, 182, 184) betätigbar sind, und mit einer in der Schalthebelachse (28) verlaufenden Zugfeder (26), die Rastmittel zur Arretierung des Schalthebels (10, 12) in unterschiedlichen Kippschaltstellungen vorspannt, dadurch gekennzeichnet, daß der Schalthebel (10, 12) in der Schaltkonsole (14) um die Schalthebelachse (28) verdrehbar gelagert ist, daß an der Schaltkonsole (14) befestigte, durch Verdrehen des Schalthebels (10, 12) betätigbare Schaltelemente (20, 24) vorgesehen sind, und daß die Zugfeder (26) an dem Schalthebel (10, 12) angreift und diesen gegen die Schaltkonsole (14) zieht.

2. Schaltvorrichtung nach Anspruch 1, dadurch gekennzeichnet, daß der Schalthebel (10, 12) einen quer zur Schalthebelachse (28) verlaufenden Stift (34) aufnimmt, dessen Enden sich an der Schaltkonsole (14) abstützen, und in den die Zugfeder (26) eingehängt ist.

3. Schaltvorrichtung nach Anspruch 2, dadurch gekennzeichnet, daß die Schaltkonsole (14) auf ihrer Oberseite beidseits der Schalthebelachse (28) segmentförmige Ausnehmungen (57) aufweist, in denen die Enden des Stiftes (34) gelagert sind, und daß bezüglich der Schalthebelachse (28) radial ausgerichtete Seitenflächen (59) der Ausnehmungen (57) als Anschläge für die Stifte (34) bei der Verdrehung des Schalthebels (10, 12) dienen.

4. Schaltvorrichtung nach Anspruch 2 oder 3, dadurch gekennzeichnet, daß durch die Lage des Stiftes (34) die Kippachse des Schalthebels (10, 12) definiert wird.

5. Schaltvorrichtung nach einem der Ansprüche 1 bis 4, dadurch gekennzeichnet, daß am Schalthebel (10, 12) ein sich mitdrehendes Rastlager (16) befestigt ist, das an der Rückseite der Schaltkonsole (14) anliegt und mit dieser Raststellungen bildet, durch die Schaltpositionen definiert sind.

6. Schaltvorrichtung nach Anspruch 5, dadurch gekennzeichnet, daß das Rastlager (16) am Schalthebel (10, 12) über den Stift (34) drehbar festgelegt ist, so daß das Rastlager (16) an Kippbewegungen des Schalthebels (10, 12) nicht teilnimmt.

7. Schaltvorrichtung nach Anspruch 5 oder 6, dadurch gekennzeichnet, daß das Rastlager (16) einen zylindrischen Ansatz (94) aufweist, der sich in eine zylindrische Ausnehmung (40) der Schaltkonsole (14) erstreckt, und daß im Bereich der Auflagefläche (56, 58) zwischen Schaltkonsole (14) und Rastlager (16) das Rastlager (16) wenigstens eine Erhöhung (82) trägt, die mit wenigstens einer Vertiefung (54) in der Schaltkonsole (14) korrespondiert, oder umgekehrt, um die Schaltpositionen festzulegen.

8. Schaltvorrichtung nach einem der Ansprüche 4 bis 7, dadurch gekennzeichnet, daß ein Teil (130) des Schalthebels (10, 12) sich durch eine axiale Ausnehmung in dem Rastlager (16) erstreckt und im Bereich der Kippachse (34) formschlüssig an dem Rastlager (16) anliegt, und daß die Ausnehmung sich zumindest in der Ebene der Kippbewegung von der Kippachse (34) aus kegelförmig aufweitet.

9. Schaltvorrichtung nach einem der Ansprüche 4 bis 8, dadurch gekennzeichnet, daß das Rastlager (16) an seiner der Schaltkonsole (14) abgewandten Seite eine Schaltkulisse (18) trägt, die einen Stift (118) führt, in den das an der Schaltkonsole (14) angreifende Ende der Zugfeder (26) eingehängt ist und die Raststellungen für die Kippbewegungen definiert.

10. Schaltvorrichtung nach Anspruch 9, dadurch gekennzeichnet, daß die Schaltkulisse (18) zur Aufnahme des Stiftes (118) eine in der Schalthebelachse (28) liegende Einbuchtung (120) für eine mittlere stationäre Lage, eine auf einer Seite neben der Schalthebelachse (28) liegende Einbuchtung (122) für eine stationäre gekippte Lage und eine auf der anderen Seite schräg auslaufende Einbuchtung (124) für eine instabile seitliche Lage des Schalthebels (10, 12) aufweist.

11. Schaltvorrichtung nach Anspruch 10, dadurch gekennzeichnet, daß im Bereich der Schaltkulisse (14) wenigstens ein elektrisches Kontaktstück (182) direkt oder indirekt kippfest befestigt ist, welches mit wenigstens einem an dem Schalthebel (10, 12) befestigten elektrischen Kontaktstück (184) wenigstens ein Schaltelement bildet.

12. Schaltvorrichtung nach Anspruch 11, dadurch gekennzeichnet, daß das Schaltelement lediglich bei Verkippen des Schalthebels (10, 12) in seine instabile Lage geschlossen ist.

13. Schaltvorrichtung nach Anspruch 11 oder 12, dadurch gekennzeichnet, daß das Schaltelement mit einer Lichthupe in Verbindung steht und diese bei Verkippen des Schalthebels (10, 12) mit einer Stromquelle verbindet.

14. Schaltvorrichtung nach einem der Ansprüche 1 bis 13, dadurch gekennzeichnet, daß auf der Rückseite der Schaltkonsole (14) wenigstens ein Schalter (22) angeordnet ist, dessen Betätigungselement (90) im Einflußbereich eines durch die Schalterkonsole (14) durchgreifenden Teiles (130) des Schalthebels (10, 12) liegt und bei Verdrehen und/oder Verkippen des Schalthebels (10, 12) eine Schaltfunktion ausführt.

15. Schaltvorrichtung nach Anspruch 14, dadurch gekennzeichnet, daß das Betätigungselement (90) so angeordnet ist, daß die Schaltfunktion bei Verkippen des Schalthebels (10, 12) in eine stationäre Lage ausgeführt wird.

16. Schaltvorrichtung nach Anspruch 15, dadurch gekennzeichnet, daß der Schalter (22) mit dem Abblendlicht und dem Fernlicht in Verbindung steht und diese alternativ bei Kippbewegungen des Schalthebels (10, 12) zwischen einer mittleren stationären Lage und einer seitlichen stationären Lage mit einer Stromquelle verbindet.

17. Schaltvorrichtung nach einem der Ansprüche 14 bis 16, dadurch gekennzeichnet, daß das die Schaltkonsole durchgreifende Teil des Schalthebels (10, 12) oder ein mit diesem drehfest verbundenes Teil (16) wenigstens eine Lasche (84) trägt, die bei Verdrehung des Schalthebels (10, 12) das Betätigungselement (86, 88) wenigstens eines Schalters (20, 24) beeinflußt.

18. Schaltvorrichtung nach Anspruch 17, dadurch gekennzeichnet, daß an dem Rastlager (16) beidseits der Schalthebelachse (28) je eine axial ausgerichtete Lasche (84) zur Betätigung je eines Schalters (20, 24) derart angeformt ist, daß bei einer mittleren Stellung des Schalthebels (10, 12) keiner der beiden Schalter (20, 24) und bei Verdrehung des Schalthebels (10, 12) auf eine Seite jeweils einer der Schalter (20, 24) betätigt wird.

19. Schaltvorrichtung nach Anspruch 18, dadurch gekennzeichnet, daß die Schalter (20, 24) jeweils mit den Richtungsanzeigen einer Seite des Fahrzeuges in Verbindung stehen und bei Verdrehung des Schalthebels (10, 12) aus der mittleren Position jeweils die Richtungsanzeigen einer Seite mit einer Stromquelle verbinden.

20. Schaltvorrichtung nach einem der Ansprüchen 14 bis 19, dadurch gekennzeichnet, daß auf der Rückseite der Schaltkonsole (14) drei Mikroschalter (20, 22, 24) nebeneinander und miteinander fluchtend angeordnet sind, wobei der mittlere Schalter (22) durch eine Kippbewegung des Schalthebels (10, 12) und die seitlichen Schalter (20, 24) durch eine Drehbewegung des Schalthebels (10, 12) betätigbar sind.

21. Schaltvorrichtung nach einem der Ansprüche 1 bis 20, dadurch gekennzeichnet, daß auf der Rückseite der Schaltkonsole (14) wenigstens zwei parallele und axial ausgerichtete Zwischenwände (44) angeformt sind, zwischen denen wenigstens ein Mikroschalter (20), 22, 24) angeordnet ist, und daß der Schalter (20, 22, 24) durch zwei sich durch Ausnehmungen in dem Schalter (20, 22, 24) und Ausnehmungen (46, 48) in den Zwischenwänden (44) erstreckende Gewindestifte (51) an der Schaltkonsole (14) befestigbar ist.

22. Schaltvorrichtung nach einem der Ansprüche 1 bis 21, dadurch gekennzeichnet, daß der Schalthebel aus einem unteren Teil (12) und einem oberen Teil (10) besteht und das freie Ende (32) des oberen Teiles (10) zur Drehachse (28) abgewinkelt ist.

23. Schaltvorrichtung nach Anspruch 22, dadurch gekennzeichnet, daß das obere Teil (10) und das untere Teil (12) über eine zylindrische Paßfläche (136, 138) miteinander in Verbindung stehen, und daß beide Teile (10, 12) quer zur Schalthebelachse (28) verlaufende korrespondierende Bohrungen (140, 142) zur gemeinsamen Aufnahme des die Kippachse bildenden Stiftes (34) aufweisen.

24. Schaltvorrichtung nach Anspruch 23, dadurch gekennzeichnet, daß das untere Teil (12) des Schalthebels im wesentlichen hutförmig ausgebildet ist, wobei die Hutkrempe (132) sich vom oberen Teil (10) weg erstreckt und einen Ansatz (38) der Schaltkonsole (14) übergreift, und daß innerhalb der Krempe (132) das untere Teil (12) ein konzentrisch zur Schalthebelachse (28) verlaufendes rohrförmiges Teil (130) enthält, welches sich durch eine Ausnehmung in der Konsole (14) erstreckt und in welchem die Zugfeder (26) verläuft.

25. Schaltvorrichtung nach Anspruch 24, dadurch gekennzeichnet, daß am freien Ende (148) des rohrförmigen Teils (130) dieses einen axialen Schlitz (152) aufweist, der als Führung für den sich an der Schaltkonsole (14) oder der Schaltkulisse (18) abstützenden Stift (118), in den die Zugfeder (26) eingehängt ist, dient.

26. Schaltvorrichtung nach Anspruch 24 oder 25, dadurch gekennzeichnet, daß die Hutkrempe (132) eine zur Hutoberseite (134) hin offene umlaufende Ringnut (144) aufweist, in die ein zylindrischer Ringabschnitt (145) des oberen Teils (10) des Schalthebels eingreift, und daß der obere Teil (10) einen sich innerhalb der Mantelfläche (158) axial erstreckenden Zylinder (154) aufweist, welcher in eine zylindrische Ausnehmung (136) des rohrförmigen Teils (130) des unteren Teils (12) des Schalthebels eingreift.

27. Schaltvorrichtung nach einem der Ansprüche 1 bis 26, dadurch gekennzeichnet, daß in dem freien, zu betätigenden Endbereich (32) des Schalthebels (10, 12) ein axial verschiebbarer Stößel (162) geführt ist, der an einem Ende einen Betätigungsknopf (166) trägt, und an dessen anderem Ende (170) ein Schaltstück (178) befestigt ist, welches mit einem im Schalthebelinneren befestigten Schaltstück (180) ein Schaltelement bildet.

28. Schaltvorrichtung nach Anspruch 27, dadurch gekennzeichnet, daß zwischen Stößel (162) und Schalthebel (10, 12) eine Druckfeder (174) angeordnet ist, die den Stößel (162) gegen einen Anschlag in Richtung Schalthebelende drückt.

29. Schaltvorrichtung nach Anspruch 27 oder 28, dadurch gekennzeichnet, daß bei Betätigung des Betätigungsknopfes (166) das Schaltelement geschlossen wird und eine Hupe des Fahrzeuges mit einer Stromquelle verbindet.

30. Schaltvorrichtung nach einem der Ansprüche 11 bis 29, dadurch gekennzeichnet, daß die Schaltstücke Flachsteckkontakte (178, 180, 182, 184) sind.

## Claims

1. A switch device for optical and acoustical signal sources, especially for direction indicators, dipped-main beam switching, flasher and/or horn of vehicles, with a switch console (14), in which a switch lever (10, 12) is so mounted that switch elements (22, 182, 184) are operable by tilting the switch lever axis (28), and with a tension spring (26) running along the switch lever axis (28) to bias detent means for holding the switch lever (10, 12) in different tilted positions, characterized in that the switch lever (10, 12) is rotatably mounted in the switch console (14) about the switch lever axis (28), in that switch elements (20, 24) operable by rotation of the switch lever (10, 12) are provided, and in that the tension spring (26) engages on the switch lever (10, 12) and pulls this against the switch console (14).

2. A switch device according to claim 1, characterized in that the switch lever (10, 12) receives a pin (34) extending transverse to the switch lever axis (28) and whose ends bear on the switch console (14) and on which the tension spring (26) is suspended.

3. A switch device according to claim 2, characterized in that the switch console (14) has segmental recesses (57) on its upper side to either side of the switch lever axis (28), in which recesses the ends of the pin (34) are mounted, and in that side surfaces (59) of the recesses (57) directed radially relative to the switch lever axis (28) serve as stops for the pin (34) when the switch lever (10, 12) is rotated.

4. A switch device according to claim 2 or 3, characterized in that the tilt axis of the switch lever (10, 12) is defined by the position of the pin (34).

5. A switch device according to any one of claims 1 to 4, characterized in that a detent bearing (16) rotating with the switch lever (10, 12) is fixed thereon, this bearing bearing on the rear side of the switch console (14) and forming detent positions therewith, through which the switch positions are defined.

6. A switch device according to claim 5, characterized in that the detent bearing (16) is rotatably fixed on the switch lever (10, 12) by the pin (34), so that the detent bearing (16) does not participate in the tilting movements of the switch lever (10, 12).

7. A switch device according to claim 5 or 6, characterized in that the detent bearing (16) has a cylindrical projection (94) which fits into a cylindrical recess (40) of the switch console (14), and in that the detent bearing (16) has at least one protuberance (82) in the region of the bearing surfaces (56, 58) between the switch console (14) and the detent bearing (16), the protuberance corresponding with at least one depression (54) in the switch console (14), or conversely, in order to establish the switch positions.

8. A switch device according to any one of claims 4 to 7, characterized in that a part (130) of the switch lever (10, 12) extends through an axial recess in the detent bearing (16) and interlocks with the detent bearing (16) in the region of the tilt axis (34), and in that the recess widens out conically from the tilt axis (34) at least in the plane of the tilting movement.

9. A switch device according to any one of claims 4 to 8, characterized in that the detent bearing (16) carries a switch slide (18) which guides a pin (118) on which the end of the tension spring (26) engaging the switch console (14) is suspended and which defines the detent positions for the tilting movements.

10. A switch device according to claim 9, characterized in that the switch slide (18) has, for reception of the pin (118), an indentation (120) lying in the switch lever axis (28) for a central stationary position, an indentation (122) to one side next to the switch lever axis (28) for a stationary tilted position and an indentation (124) on the other side running obliquely for an unstable position of the switch lever (10, 12) to one side.

11. A switch device according to claim 10, characterized in that at least one electrical contact piece (182) is fixed directly or indirectly, so as not to tilt, in the region of the switch slide (18), and forms at least one switch element with at least one electrical contact piece (184) fixed on the switch lever (10, 12).

12. A switch device according to claim 11, characterized in that the switch element is closed only on tilting the switch lever (10, 12) into its unstable position.

13. A switch device according to claim 11 or 12, characterized in that the switch element is connected to a flasher and connects this to a current source on tilting the switch lever (10, 12).

14. A switch device according to any one of claims 1 to 13, characterized in that at least one switch (22) is arranged on the rear side of the switch console (14) with its operating element (90) in the range of influence of a part (130) of the switch lever (10, 12) engaging through the switch console (14), the switch performing a switching operation on rotating and/or tilting the switch lever (10, 12).

15. A switch device according to claim 14, characterized in that the operating element (90) is so arranged that the switching operation is performed on tilting the switch lever (10, 12) into a stationary position.

16. A switch device according to claim 15, characterized in that the switch (22) is connected to the dipped light and the main beam and connects these alternatively to a current source on tilting movement of the switch lever (10, 12) between a central stationary position and a stationary position to one side.

17. A switch device according to any one of claims 14 to 16, characterized in that the part of the switch lever (10, 12) engaging through the switch console (14) or a part (16) rotationally fast therewith carries at least one tongue (84) which acts on the operating element (86, 88) of at least one switch (20, 24) on rotation of the switch lever (10, 12).

18. A switch device according to claim 17, characterized in that an axially directed tongue (84) is so formed on the detent bearing (16) on either side of the switch lever axis (28) for operation of a respective switch (20, 24) that, in a central position of the switch lever (10, 12) neither of the two switches (20, 24) is operated and, on rotation of the switch lever (10, 12) to one side, one of the switches (20, 24) is operated.

19. A switch device according to claim 18, characterized in that the switches (20, 24) are each connected to the direction indicators on one side of the vehicle and connect the direction indicators on a corresponding side on rotation of the switch lever (10, 12) out of the central position.

20. A switch device according to any one of claims 14 to 19, characterized in that three microswitches (20, 22, 24) are mounted on the rear side of the switch console (14) alongside each other and are lined up with one another, whereby the central switch (22) is operable by a tilting movement of the switch lever (10, 12) and the lateral switches are operable by a rotary movement of the switch lever (10, 12).

21. A switch device according to any one of claims 1 to 20, characterized in that at least two parallel and axially directed intermediate walls (44) are formed on the rear side of the switch console (14), between which walls at least one microswitch (20, 22, 24) is arranged, and in that the switch (20, 22, 24) can be fixed to the switch console (14) by two threaded pins (51) extending through recesses in the switch (20, 22, 24) and recesses (46, 48) in the intermediate walls (44).

22. A switch device according to any one of claims 1 to 21, characterized in that the switch lever consists of a lower part (12) and an upper part (10) and the free end (32) of the upper part (10) is bent relative to the axis (28) of rotation.

23. A switch device according to claim 22, characterized in that the upper part (10) and the lower part (12) are connected to each other through cylindrical mating surfaces (136, 138) and in that both parts (10, 12) have corresponding bores (140, 142) transverse to the switch lever axis (28) for reception together of the pin (34) forming the tilt axis.

24. A switch device according to claim 23, characterized in that the lower part (12) of the switch lever is shaped substantially like a hat, with the hat rim (132) extending away from the upper part (10) and engaging over a projection (38) of the switch console (14), and in that, within the rim (132) the lower part (12) includes a tubular part (130) extending concentrically with the switch lever axis (28) and which extends through a recess in the console (14) and through which the tension spring (26) runs.

25. A switch device according to claim 24, characterized in that the tubular part (130) has an axial slot (152) at the free end (148) thereof, which slot serves as a guide for the pin (118), on which the tension spring (26) is suspended, bearing on the switch console (14) or the switch slide (18).

26. A switch device according to claim 24 or 25, characterized in that the hat rim (132) has an annular groove (144) open to the upper side (134) of the hat, in which groove engages a cylindrical, annular section (145) of the upper part (10) of the switch lever, and in that the upper part (10) has an axially extending cylinder (154) within the peripheral surface (158), which cylinder engages in a cylindrical recess (136) of the tubular part (130) of the lower part (12) of the switch lever.

27. A switch device according to any one of claims 1 to 26, characterized in that an axially slidable plunger (162) is guided in the free, operating end region (32) of the switch lever (10, 12), which plunger carries an operating button (166) on one end and to whose other end (170) is fixed a switch piece (178) which forms a switch element with a switch piece (180) fixed in the interior of the switch lever.

28. A switch device according to claim 27, characterized in that a compression spring (174) is arranged between the plunger (162) and the switch lever (10, 12) and urges the plunger (162) in the direction of the end of the switch lever against a stop.

29. A switch device according to claim 27 or 28, characterized in that the switch element is closed by operation of the operating button (166) and connects a horn of the vehicle to a current source.

30. A switch device according to any one of claims 11 to 29, characterized in that the switch pieces are flat make contacts (178, 180, 182, 184).

## Revendications

1. Dispositif de commutation pour des transmetteurs de signaux optiques et acoustiques, notamment pour l'indication de direction, le passage des phares de croisement en pleins phares, l'avertisseur lumineux et/ou l'avertisseur sonore de véhicules, avec une console de commutation (14) dans laquelle un levier de commutation (10, 12) est monté de telle sorte que des éléments de commutation (22, 182, 184) peuvent être actionnés par basculement de l'axe (28) du levier de commutation, et avec un ressort de traction (26), qui s'étend dans l'axe (28) du levier de commutation et qui précontraint des moyens de crantage pour bloquer le levier de commutation (10, 12) dans différentes positions de commutation basculées,
**caractérisé** en ce que le levier de commutation (10, 12) est monté dans la console de commutation (14) avec possibilité de rotation autour de l'axe (28) du levier de commutation, en ce qu'il est prévu des éléments de commutation (20, 24), qui sont fixés sur la console de commutation (14) et qui peuvent être actionnés par rotation du levier de commutation (10, 12), et en ce que le ressort de traction (26) agit sur le levier de commutation (10, 12) et le tire contre la console de commutation (14).

2. Dispositif de commutation selon la revendication 1, **caractérisé** en ce que le levier de commutation (10, 12) reçoit une broche (34), qui s'étend transversalement à l'axe (28) du levier de commutation, dont les extrémités s'appuient contre la console de commutation (14) et à laquelle est accroché le ressort de traction (26).

3. Dispositif de commutation selon la revendication 2, **caractérisé** en ce que la console de commutation (14) présente sur le dessus, de part et d'autre de l'axe (28) du levier de commutation, des évidements (57) en forme de segments dans lesquels sont montées les extrémités de la broche (34), et en ce que des faces latérales (59) des évidements (57), orientées radialement à l'axe (28), servent de butée pour la broche (34) lors de la rotation du levier de commutation (10, 12).

4. Dispositif de commutation selon la revendication 2 ou 3, **caractérisé** en ce que l'axe de basculement du levier de commutation (10, 12) est défini par la position de la broche (34).

5. Dispositif de commutation selon l'une quelconque des revendications 1 à 4, **caractérisé** en ce qu'un palier de crantage conjointement rotatif (16) est fixé sur le levier de commutation (10, 12), et il s'applique contre l'arrière de la console de commutation (14) et forme avec elle des positions de crantage, qui définissent des positions de commutation.

6. Dispositif de commutation selon la revendication 5, **caractérisé** en ce que le palier de crantage (16) est fixé à rotation sur le levier de commutation (10, 12) par l'intermédiaire de la broche (34), de sorte que le palier de crantage (16) ne participe pas aux mouvements de basculement du levier de commutation (10, 12).

7. Dispositif de commutation selon la revendication 5 ou 6, **caractérisé** en ce que le palier de crantage (16) présente un appendice cylindrique (94) qui s'étend dans un évidement cylindrique (40) de la console de commutation (14), et en ce que le palier de crantage (16) porte, dans la région de la face d'application (56, 58) entre la console de commutation (14) et le palier de crantage (16), au moins un bossage (82) qui correspond avec au moins un renfoncement (54) dans la console de commutation (14), ou vice-versa, afin de fixer les positions de commutation.

8. Dispositif de commutation selon l'une quelconque des revendications 4 à 7, **caractérisé** en ce qu'une partie (130) du levier de commutation (10, 12) s'étend à travers un évidement axial dans le palier de crantage (16) et s'applique par complémentarité de forme contre le palier de crantage (16) dans la région de l'axe de basculement (34), et en ce que l'évidement, à partir de l'axe de basculement (34), s'élargit coniquement au moins dans le plan du mouvement de basculement.

9. Dispositif de commutation selon l'une quelconque des revendications 4 à 8, **caractérisé** en ce que le palier de crantage (16) porte, à son extrémité éloignée de la console de commutation (14), une coulisse de commutation (18) qui guide une broche (118), à laquelle est accrochée l'extrémité du ressort de traction (26) agissant sur la console de commutation (14) et qui définit les positions de crantage pour les mouvements de basculement.

10. Dispositif de commutation selon la revendication 9, **caractérisé** en ce que la coulisse de commutation (18) présente, pour recevoir la broche (118), une anfractuosité (120) située dans l'axe (28) du levier de commutation pour une position médiane stationnaire, une anfractuosité (122) située sur un côté de l'axe (28) du levier de commutation pour une position basculée stationnaire, et une anfractuosité (124) débouchant en oblique sur l'autre côté, pour une position latérale instable du levier de commutation (10, 12).

11. Dispositif de commutation selon la revendication 10, **caractérisé** en ce qu'au moins une pièce de contact électrique (182) est fixée de manière directement ou indirectement solidaire en basculement dans la région de la coulisse de commutation (18), et elle forme au moins un élément de commutation avec au moins une pièce de contact électrique (184) fixée sur le levier de commutation (10, 12).

12. Dispositif de commutation selon la revendication 11, **caractérisé** en ce que l'élément de commutation est fermé uniquement lors du basculement du levier de commutation (10, 12) dans sa position instable.

13. Dispositif de commutation selon la revendication 11 ou 12, **caractérisé** en ce que l'élément de commutation est relié à un avertisseur lumineux et relie ce dernier à une source de courant lors du basculement du levier de commutation (10, 12).

14. Dispositif de commutation selon l'une quelconque des revendications 1 à 13, **caractérisé** en ce qu'au moins un commutateur (22) est disposé sur l'arrière de la console de commutation (14), et son élément d'actionnement (90) se situe dans la zone d'influence d'une partie (130) du levier de commutation (10, 12) traversant la console de commutation (14) et accomplit une fonction de commutation lors de la rotation et/ou du basculement du levier de commutation (10, 12).

15. Dispositif de commutation selon la revendication 14, **caractérisé** en ce que l'élément d'actionnement (90) est disposé de telle sorte que la fonction de commutation est accomplie lors du basculement du levier de commutation (10, 12) dans une position stationnaire.

16. Dispositif de commutation selon la revendication 15, **caractérisé** en ce que le commutateur (22) est relié au système de phares de croisement et au système de pleins phares, et il les relie alternativement à une source de courant lors de mouvements de basculement du levier de commutation (10, 12) entre une position stationnaire médiane et une position stationnaire latérale.

17. Dispositif de commutation selon l'une quelconque des revendications 14 à 16, **caractérisé** en ce que la partie du levier de commutation (10, 12) traversant la console de commutation, ou une pièce (16) qui lui est assemblée solidairement en rotation, porte au moins une patte (84) qui, lors de la rotation du levier de commutation (10, 12), agit sur l'élément d'actionnement (86, 88) d'au moins un commutateur (20, 24).

18. Dispositif de commutation selon la revendication 17, **caractérisé** en ce qu'une patte (84) respective, orientée axialement, est formée sur le palier de crantage (16) de part et d'autre de l'axe (28) du levier de commutation en vue de l'actionnement d'un commutateur respectif (20, 24), de telle sorte qu'aucun des deux commutateurs (20, 24) n'est actionné dans une position médiane du levier de commutation (10, 12), tandis qu'un des commutateurs (20, 24) est respectivement actionné lors de la rotation du levier de commutation (10, 12) sur un côté.

19. Dispositif de commutation selon la revendication 18, **caractérisé** en ce que les commutateurs (20, 24) sont respectivement reliés aux indicateurs de direction d'un côté du véhicule, et ils relient respectivement les indicateurs de direction d'un côté à une source de courant lors de la rotation du levier de commutation (10, 12) à partir de la position médiane.

20. Dispositif de commutation selon l'une quelconque des revendications 14 à 19, **caractérisé** en ce que trois commutateurs miniatures (20, 22, 24) sont juxtaposés en alignement mutuel sur l'arrière de la console de commutation (14), le commutateur central (22) pouvant être actionné par un mouvement de basculement du levier de commutation (10, 12), et les commutateurs latéraux (20, 24) par un mouvement de rotation du levier de commutation (10, 12).

21. Dispositif de commutation selon l'une quelconque des revendications 1 à 20, **caractérisé** en ce qu'au moins deux parois intermédiaires (44), parallèles et orientées axialement, sont disposées sur l'arrière de la console de commutation (14), entre lesquelles est disposé au moins un commutateur miniature (20, 22, 24), et en ce que le commutateur (20, 22, 24) peut être fixé sur la console de commutation (14) par des vis sans tête (51) passant par des évidements dans le commutateur (20, 22, 24) et des évidements (46, 48) dans les parois intermédiaires (44).

22. Dispositif de commutation selon l'une quelconque des revendications 1 à 21, **caractérisé** en ce que le levier de commutation est constitué d'une partie inférieure (12) et d'une partie supérieure (10), et l'extrémité libre (32) de la partie supérieure (10) est coudée par rapport à l'axe de rotation (28).

23. Dispositif de commutation selon la revendication 22, **caractérisé** en ce que la partie supérieure (10) et la partie inférieure (12) sont mutuellement assemblées par l'intermédiaire d'une face d'ajustement cylindrique (136, 138), et en ce que les deux parties (10, 12) présentent des perçages correspondants (140, 142), s'étendant transversalement à l'axe (28) du levier de commutation et destinés à recevoir conjointement la broche (34) constituant l'axe de basculement.

24. Dispositif de commutation selon la revendication 23, **caractérisé** en ce que la partie inférieure (12) du levier de commutation est configurée sensiblement en forme de chapeau, le bord (132) du chapeau s'éloignant de la partie supérieure (10) et recouvrant un couronnement (38) de la console de commutation (14), et en ce que la partie inférieure (12) contient, à l'intérieur du bord de chapeau (132), une partie tubulaire (130) qui s'étend concentriquement à l'axe (28) du levier de commutation, qui passe par un évidement dans la console (14) et dans laquelle s'étend le ressort de traction (26).

25. Dispositif de commutation selon la revendication 24, **caractérisé** en ce que la partie tubulaire (130) présente, à son extrémité libre (148), une fente axiale (152) qui sert de guide pour la broche (116), qui s'appuie contre la console (14) ou la coulisse (18) de commutation et à laquelle est accroché le ressort de traction (26).

26. Dispositif de commutation selon la revendication 24 ou 25, **caractérisé** en ce que le bord de chapeau (132) présente une rainure annulaire entourante (144), ouverte vers le dessus (134) du chapeau et dans laquelle s'engage un tronçon annulaire cylindrique (145) de la partie supérieure (10) du levier de commutation, et en ce que la partie supérieure (10) présente un cylindre (154), qui s'étend à l'intérieur de la face d'enveloppe (158) et s'engage dans un évidement cylindrique (136) de la partie tubulaire (130) de la partie inférieure (12) du levier de commutation.

27. Dispositif de commutation selon l'une quelconque des revendications 1 à 26, **caractérisé** en ce qu'un poussoir axialement coulissant (162) est guidé dans la région terminale libre (32) du levier de commutation (10, 12) qui doit être actionnée, ce poussoir portant un bouton d'actionnement (166) à une extrémité tandis qu'est fixée, à son autre extrémité (170), une pièce de contact (178) qui forme un élément de commutation avec une pièce de contact (180) fixée à l'intérieur du levier de commutation.

28. Dispositif de commutation selon la revendication 27, **caractérisé** en ce qu'un ressort de pression (174) est disposé entre le poussoir (162) et le levier de commutation (10, 12), et il presse le poussoir (162) contre une butée en direction de l'extrémité du levier de commutation.

29. Dispositif de commutation selon la revendication 27 ou 28, **caractérisé** en ce que, lors de l'actionnement du bouton d'actionnemen**t** (166), l'élément de commutation est fermé et relie un avertisseur du véhicule à une source de courant.

30. Dispositif de commutation selon l'une quelconque des revendications 11 à 29, **caractérisé** en ce que les pièces de contact sont des fiches de contact plates (178, 180, 182, 184).
